# FASCICULE DE BREVET EUROPEEN

(11) **EP 1 533 884 B1**
(45) Date de publication et mention de la délivrance du brevet: **18.10.2006**
(21) Numéro de dépôt: 04078058.7
(22) Date de dépôt: 08.11.2004
(51) Int. Cl.: H02K 7/02, H02K 49/04, H02K 17/16

(54) **Accumulateur d'énergie cinétique**
Speicher für kinetische Energie
Kinetic energy storage

(30) Priorité: 19.11.2003 BE 200300622
(43) Date de publication de la demande: 25.05.2005
(73) Titulaire: KS Research, société anonyme, 4630 Soumagne (BE)
(72) Inventeur: Kupisiewicz, Stefan, B-4630 Soumagne (BE); Schoebrechts, Jacques, B-4630 Soumagne (BE)
(74) Mandataire: Donné, Eddy

(56) Documents cités:
- GB-A- 705 559
- GB-A- 1 324 265
- US-A- 6 023 152
- US-A1- 2002 167 234
- US-A1- 2003 137 196

## Description

Cette invention concerne un accumulateur d'énergie cinétique, plus précisément, un accumulateur à grande réserve d'énergie cinétique.

Il est connu d'utiliser des accumulateurs à grande réserve d'énergie cinétique dans des systèmes d'alimentation électrique sans interruption (ASI), où l'énergie est stockée dans une masse métallique en rotation.

Les ASI sont essentiellement destinés à sauvegarder des utilisateurs sensibles aux perturbations d'un réseau électrique, c'est à dire, des utilisateurs comme par exemple des services de soins intensifs d'hôpitaux ou des entreprises de services fortement informatisées, pour lesquels une interruption du réseau électrique pendant quelques millisecondes met en danger des vies humaines ou provoque des coûts financiers importants.

Parmi les accumulateurs d'énergie connus, il existe des types d'ASI dans lesquels la réserve d'énergie cinétique se réalise au moyen d'un cylindre plein en rotation.

Un inconvénient de ce type d'accumulateur d'énergie est que le cylindre a un faible moment d'inertie qui doit être compensé par une vitesse de rotation rapide, car l'énergie cinétique accumulée dans le cylindre est proportionnelle avec le carré de la vitesse de rotation.

Un autre inconvénient lié à cette vitesse de rotation rapide susdite est que la complexité des problèmes liés aux contraintes mécaniques (comme par exemple les vibrations, la tenue des roulements, la lubrification etc.) augmente considérablement, ceci au détriment de la fiabilité et des coûts de fabrication.

Un autre type d'accumulateur d'énergie cinétique connu est muni d'un tambour en acier en rotation dans lequel l'énergie cinétique est accumulée.

Dans ces cas connus, le tambour en rotation est indirectement lié à un générateur synchrone qui permet de convertir l'énergie cinétique accumulée en électricité.

Un inconvénient de ce type d'accumulateurs susdit est que, si l'on veut réaliser un accumulateur d'énergie qui, avec un même poids et encombrement, réalise le double de la capacité des systèmes connus, on doit utiliser un diamètre intérieur de tambour important. Un tel diamètre important est incompatible avec l'utilisation d'un rotor à bobinages classiques car dans ce cas, les contraintes mécaniques dues aux forces centrifuges du rotor deviennent difficilement surmontables.

Un autre inconvénient des accumulateurs d'énergie connus est que, quand ils sont appliqués comme ASI de longue autonomie, ils nécessitent un système d'entraînement électrique de puissance non négligeable, permettant d'accélérer le tambour susdit le plus vite possible. Le système d'entraînement le plus simple et fiable connu à présent serait constitué d'un moteur asynchrone standard.

Cependant cette solution aurait pour inconvénient de doubler la longueur de l'accumulateur, ce qui augmente considérablement la surface au sol.

Un accumulateur connu est décrit dans US 2002/0167234.

Afin de remédier efficacement aux insuffisances des accumulateurs d'énergie cinétique connus, la présente invention a comme objet un accumulateur d'énergie cinétique comprenant essentiellement :
- un arbre qui porte un rotor muni de bobines et un rotor d'excitatrice avec bobines,
- un tambour entourant le rotor susdit, lequel tambour comporte des paliers lui permettant de tourner librement autour de l'arbre susdit,
- une carcasse portant l'arbre susdit, et le stator de l'excitatrice mentionnée ci-dessus,
caractérisé en ce que :
- le rotor susdit est un rotor à griffes, muni de bobines qui sont connectées aux bobines du rotor de l'excitatrice, au travers d'un pont redresseur,
- il comprend un anneau Gramme comportant des bobines, l'anneau Gramme (28) étant entouré par le tambour, et étant connecté à une source d'électricité.

Un avantage d'un accumulateur selon l'invention est qu'un rotor à griffes est appliqué afin de coupler de manière électromagnétique l'arbre avec le tambour dans lequel l'énergie cinétique est stockée.

Ce rotor à griffes nécessite une puissance d'excitation réduite d'un facteur 2 à 4 par rapport à un rotor avec une même puissance appliquée dans un type d'accumulateur connu, ce qui permet l'utilisation d'une excitatrice de faible poids et encombrement.

Un avantage, lié à l'application d'un moteur asynchrone d'entraînement du tambour qui est constitué de l'anneau Gramme de faible longueur, est que l'on peut réaliser un accumulateur d'énergie cinétique avec un encombrement relativement court.

Un avantage lié à l'avantage précédent est qu'un ASI réalisé avec l'accumulateur d'énergie selon l'invention est relativement compact et n'occupe donc qu'un minimum de place.

Afin de mieux comprendre l'objet de la présente invention, une configuration pratique et préférée d'un accumulateur d'énergie cinétique est dévoilée ci-dessous sur la base des figures jointes en annexe. Ces figures illustrent les éléments suivants:
la figure 1 représente schématiquement un réseau d'électricité muni d'un ASI qui contient un accumulateur d'énergie cinétique selon l'invention;
la figure 2 représente à une échelle supérieure une coupe transversale de l'ASI indiquée par la flèche F2 dans la figure 1;
la figure 3 représente la coupe indiquée par la ligne III-III dans la figure 2;
la figure 4 représente la partie F4 indiquée dans la figure 2;
la figure 5 représente la coupe indiquée par la ligne V-V dans la figure 4;
la figure 6 représente la même partie que la figure 4 selon une variante de l'accumulateur d'énergie cinétique;
la figure 7 représente la coupe indiquée par la ligne VII-VII dans la figure 6;
la figure 8 représente schématiquement le même réseau d'électricité que la figure 1 selon une variante;
la figure 9 représente à une échelle supérieure une coupe transversale de l'ASI indiquée par la flèche F9 dans la figure 8.

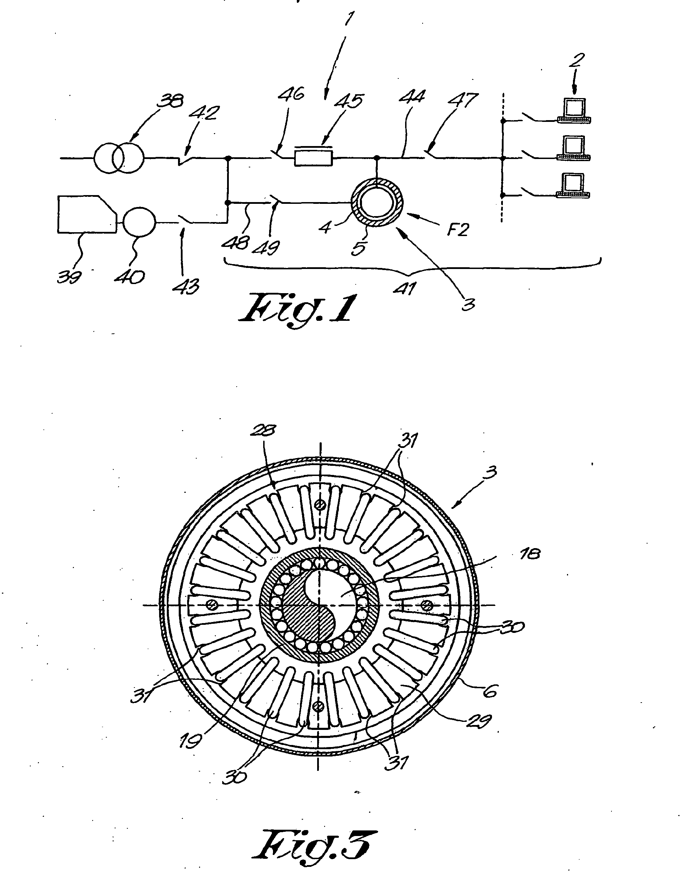

La figure 1 représente schématiquement un réseau d'électricité 1, fournissant de l'énergie à des utilisateurs sensibles 2, muni d'un système d'alimentation électrique sans interruption, en bref, un ASI 3.

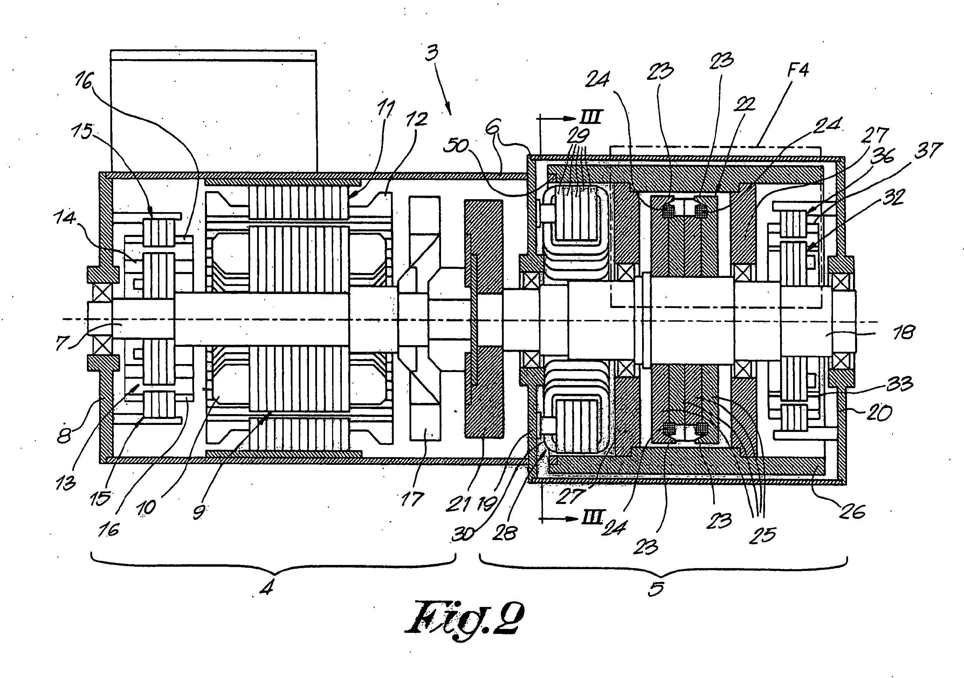

L'ASI, qui est représenté dans la figure 2, est constitué principalement d'une machine synchrone 4 et d'un accumulateur d'énergie cinétique 5 selon l'invention, qui sont montés dans une carcasse 6.

La machine synchrone 4 est, de manière connue, constituée d'un arbre 7 étant supporté par un palier 8 et portant un rotor principal 9 muni de bobines 10.

Un stator principal 11, entourant le rotor 9 susdit, est monté dans la carcasse 6 et est également muni de bobines 12.

Joint au rotor principal 9, un rotor d'excitatrice 13, muni de bobines 14, est fixé sur l'arbre 7 susdit, ce rotor d'excitatrice 13 étant entouré d'un stator excitatrice 15 qui est pourvu de bobines 16.

La machine synchrone 4 contient ensuite un ventilateur 17 de refroidissement qui peut fournir un aérage du rotor 9 principal et du stator 11 principal.

L'accumulateur d'énergie cinétique 5 comprend un arbre 18 rigidement lié à l'arbre 7 de la machine synchrone 4, et porté par les paliers 19 et 20. L'arbre 18 porte en outre un volant d'inertie 21.

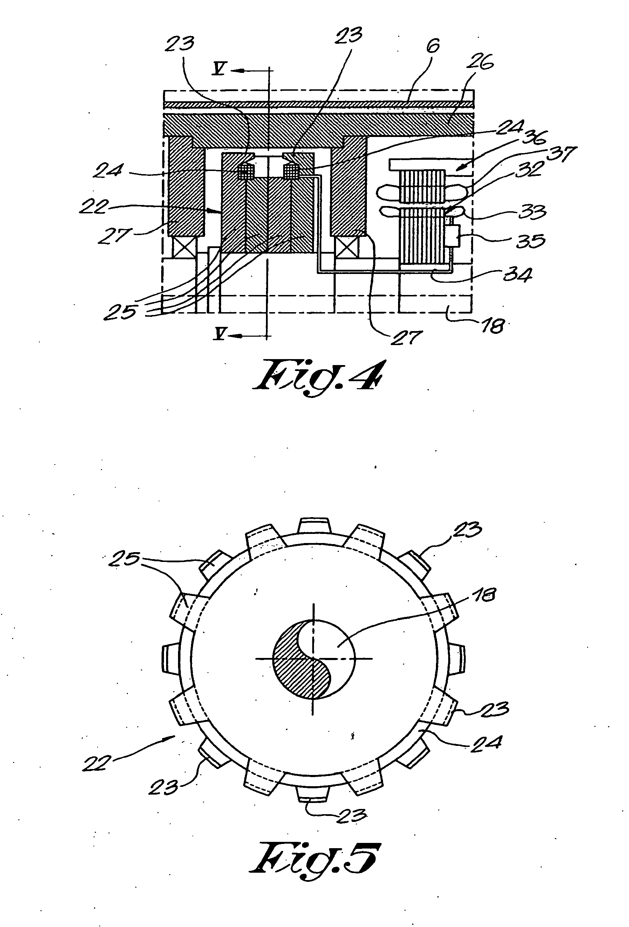

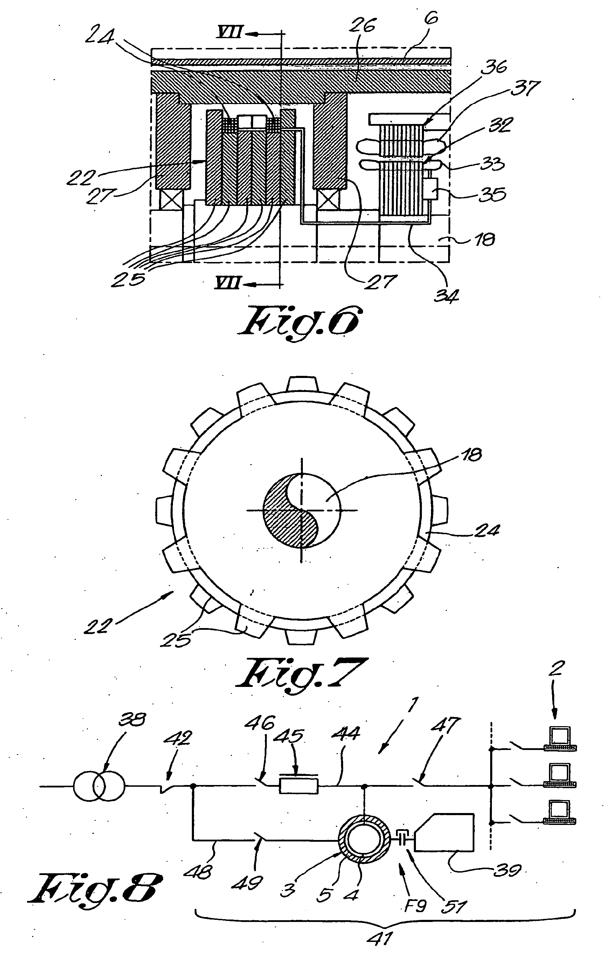

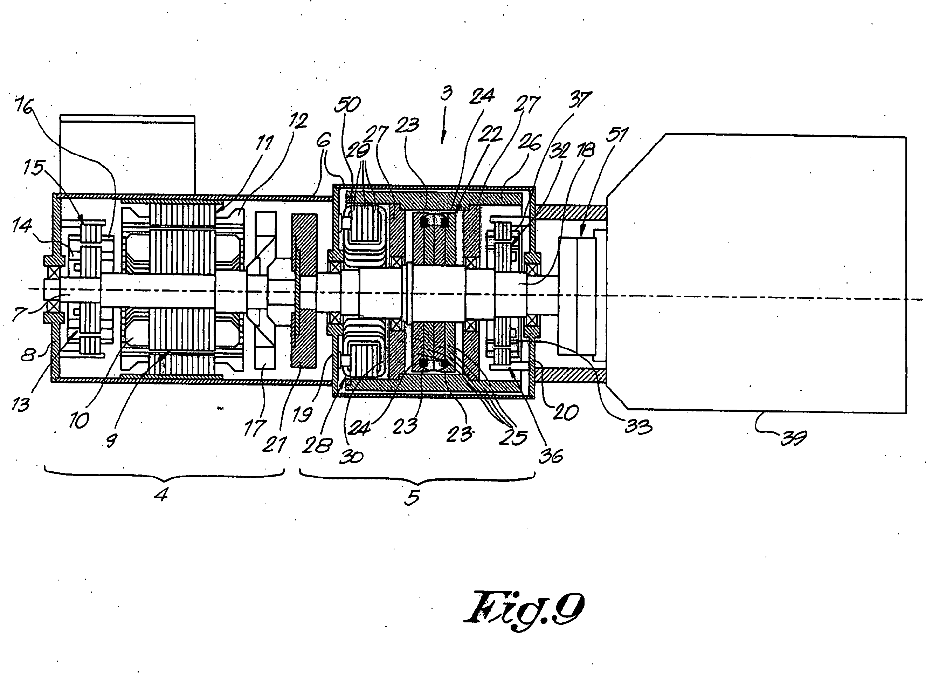

Dans la figure 5 est représenté un rotor 22 à griffes 23 étant fixé sur l'arbre 18 susdit, qui constitue la partie, appelée la partie «fixe», d'un coupleur électromagnétique et qui est muni de bobines 24.

Le rotor 22 à griffes 23 est constitué, dans ce cas, de quatre plateaux 25 parallèles qui, à leurs extrémités, sont pourvus de griffes 23.

L'autre partie du coupleur susdit est constituée d'un tambour 26 en acier qui est porté par des paliers 27 et qui peut être entraîné en rotation relative par rapport à l'arbre 18 de l'accumulateur d'énergie cinétique 5.

Un anneau Gramme 28 bien connu par l'homme de l'art est fixé sur le palier 19 central de la carcasse 6, entourant l'arbre 18 susdit et étant entouré par l'extrémité du tambour 26.

Cet anneau Gramme 28, représenté en détail dans la figure 3, est constitué d'un ensemble de tôles magnétiques empilées 29 formant un noyau feuilleté circulaire, qui est muni d'encoches 31 longitudinales, dans lesquelles des bobines 30 sont enroulées autour du noyau.

Finalement, comme représenté dans la figure 4, l'accumulateur d'énergie cinétique 5 est muni d'un rotor excitatrice 32 avec des bobines 33, qui sont liées aux bobines 24 du rotor 22 à griffes 23 à l'aide de conducteurs 34, qui passent au travers d'un pont redresseur 35 tournant bien connu.

Un stator d'excitatrice 36 correspondant au rotor d'excitatrice 32 susdit, est monté dans la carcasse 6 et est muni de bobines 37 qui peuvent être alimentées par un courant.

L'utilisation de l'ASI 3 muni d'un accumulateur d'énergie cinétique 5 est simple et est décrit ci-après.

Comme sources d'énergie, il y a un réseau 38 et un moteur 39, de préférence un moteur diesel, entraînant un alternateur 40. Le réseau 38 et l'alternateur 40 susdit sont connectés au réseau local 41 des utilisateurs 2, représentés à titre d'exemple par des ordinateurs, à l'aide de deux disjoncteurs 42-43.

Le réseau local 41 est constitué d'un conducteur 44 connectant les sources d'énergie, dans ce cas le réseau 38 et le moteur 39, aux utilisateurs 2, lequel conducteur 44 est muni d'une self 45.

Entre la self 45 susdite et les sources d'énergie 38-39, ce conducteur 44 est muni d'un premier disjoncteur 46, tandis qu'entre la self 45 et les utilisateurs sensibles 2, le conducteur 44 est couplé à la machine synchrone 4 de L'ASI 3.

En aval de ce couplage susdit, le conducteur 44 est muni d'un deuxième disjoncteur 47, qui permet d'isoler l'ASI 3 des utilisateurs 2.

Afin d'alimenter l'accumulateur 5 en énergie cinétique, un conducteur 48 couple les bobines 30 de l'anneau Gramme 28 avec les sources d'énergie 38-39, lequel conducteur est muni d'un disjoncteur 49.

En régime normal, les utilisateurs 2 sont alimentés par le réseau 38, les disjoncteurs 42, 46, 47 et 49 sont fermés, tandis que le disjoncteur 43 est ouvert.

Les bobines 30 de l'anneau Gramme 28 sont alimentées via le disjoncteur 49 par des courants alternatifs venant du réseau 38 avec une fréquence de, par exemple, 50 ou 60 Hz (Hertz).

Les champs tournants générés par les courants alternatifs susdits dans les bobines 30 de l'anneau Gramme 28, comme dans un moteur asynchrone, induisent des courants de Foucault dans le tambour 26 qui sont nécessaires à l'accélération et au maintien de la vitesse du tambour 26 à une vitesse proche de celle du synchronisme.

Afin de démarrer l'ASI après l'arrêt de l'arbre 4-18, il est possible d'alimenter les bobines 37 du stator 36 de l'excitatrice de l'accumulateur d'énergie cinétique 5 avec un courant alternatif. Celui-ci génère des courants alternatifs dans le bobinage 33 du rotor 34 de l'excitatrice susdite. Ce courant alternatif est redressé par le pont redresseur tournant 35, et est envoyé dans les bobines 24 du rotor 22 à griffes 23 et crée un couple entraînant l'arbre 18.

Une fois que la vitesse de l'arbre 18 est suffisante, le courant alternatif fourni aux bobines 37 du stator 36 susdit peut être remplacé par un courant continu.

Lorsqu'une perturbation ou la coupure du réseau 38 est détectée, ce réseau 38 est désolidarisé du réseau local 41 en opérant l'ouverture du disjoncteur 46 ainsi que l'ouverture du disjoncteur 49.

Dans ce cas, la machine synchrone 4 devient instantanément alternateur fournissant l'énergie absorbée par les utilisateurs 2. Cette énergie provient de la récupération de l'énergie cinétique stockée dans le tambour 26 en rotation.

Cette récupération est réalisée en modulant le courant continu injecté dans les bobines 37 du stator 36 de l'excitatrice de l'accumulateur d'énergie cinétique 5.

Le tambour 26 fait maintenant office d'induit dans lequel sont générés les courants de Foucault qui permettent au rotor 22 à griffes 23 d'entraîner l'arbre 7 de la machine synchrone 4 à une vitesse désirée.

Dès que la perturbation ou la coupure du réseau 38 est détectée, le moteur 39 est démarré en entraînant l'alternateur 40 et accélère jusqu'à sa vitesse de régime. Une fois que cette vitesse est atteinte, l'alimentation du réseau local 41 se fait par l'énergie générée par l'alternateur 40 entraîné par le moteur 39 par fermeture des disjoncteurs 43 et 46 après synchronisation.

Le tambour 26, qui a perdu une partie de son énergie, est de nouveau accéléré par alimentation de l'anneau Gramme 28 en courant électrique provenant de l'alternateur 40.

Il est clair que si la perturbation ou la coupure du réseau 38 est d'une durée inférieure à la durée de l'accélération du moteur 39, c'est le réseau 38 qui reprend l'alimentation du réseau local 41.

Quand la perturbation du réseau dure plus longtemps, il faudra, au moment où le réseau est rétabli, ouvrir les disjoncteurs 43 et 49, et fermer le disjoncteur 42, dans cet ordre, après quoi, le disjoncteur 49 peut être refermé afin d'accélérer le tambour 26.

Afin d'augmenter l'efficacité du couplage entre l'anneau Gramme 28 et le tambour 26, des anneaux de court-circuit 50 en matériaux conducteurs peuvent être introduits dans les extrémités du tambour 26 entourant l'anneau Gramme 28.

Les figures 6 et 7 montrent une variante dont les plateaux 25 du rotor à griffes 22 sont réalisés sous la forme de quatre plateaux crénelés 25 entre lesquels les bobines 24 sont insérées.

Une autre variante est représentée dans les figures 8 et 9 et est réalisée en liant l'axe d'un moteur thermique 39 avec l'arbre 7 et 18 de l'ASI 3 à l'aide d'un embrayage 51.

Dans ce cas, l'énergie générée par le moteur 39 n'est pas convertie en électricité par un alternateur 40, mais par la machine synchrone 4.

Il est évident que l'invention n'est nullement limitée aux réalisations décrites ci-avant, mais que de nombreuses modifications peuvent être apportées à l'accumulateur d'énergie cinétique décrit ci-avant sans sortir du cadre de l'invention telle que définie dans les revendications suivantes.

## Revendications

1. Accumulateur d'énergie cinétique comprenant essentiellement :
- un arbre qui porte un rotor muni de bobines et un rotor d'excitatrice bobiné,
- un tambour entourant le rotor susdit, lequel tambour comporte des paliers lui permettant de tourner librement autour de l'arbre susdit,
- une carcasse portant l'arbre susdit, et le stator de l'excitatrice mentionnée ci-dessus,
**caractérisé en ce que :**
- le rotor (22) susdit est un rotor à griffes (23), muni de bobines (24) qui sont connectées par un conducteur (34) aux bobines (33) du rotor de l'excitatrice (32), au travers d'un pont redresseur (35).
- il comprend un anneau Gramme (28) comportant des bobines (30), l'anneau Gramme (28) étant entouré par le tambour (26) et étant connecté au moyen d'un conducteur (48) à une source d'électricité (38-39).

2. Accumulateur d'énergie cinétique selon la revendication 1, **caractérisé en ce qu**'il est lié à une machine synchrone pour former une ASI (Alimentation Sans Interruption) de grande autonomie.

3. Accumulateur d'énergie cinétique selon la revendication 1, **caractérisé en ce qu**'il est lié à une machine synchrone pour former une ASI (Alimentation Sans Interruption) de grande puissance.

4. Accumulateur d'énergie cinétique selon l'une quelconque des revendications précédentes, **caractérisé en ce que** les bobines (37) du stator (36) de l'excitatrice susdites peuvent être reliées à une source d'électricité alternative et/ou à une source d'électricité continue.

5. Accumulateur d'énergie cinétique selon l'une quelconque des revendications précédentes, **caractérisé en ce que** la source d'électricité reliée à l'anneau Gramme (28) est un réseau (38) électrique et/ou une alimentation à fréquence variable.

6. Accumulateur d'énergie cinétique selon l'une quelconque des revendications précédentes, **caractérisé en ce que** la partie du tambour (26) entourant l'anneau Gramme(28) est muni des anneaux court-circuit (50) en matériaux conducteurs.

7. Accumulateur d'énergie cinétique selon l'une des revendications 2 ou 3, **caractérisé en ce que** l'arbre (18) de l'accumulateur d'énergie cinétique est lié à l'axe d'un moteur (39).

8. Accumulateur d'énergie cinétique selon la revendication 7, **caractérisé en ce que** la liaison entre l'arbre (18) susdit et l'axe du moteur (39) est réalisée au moyen d'un embrayage (51).

9. Accumulateur d'énergie cinétique selon revendication 1, **caractérisé en ce que** le tambour (26) est réalisé en acier.

10. Accumulateur d'énergie cinétique selon la revendication 1, **caractérisé en ce que** le rotor (22) à griffes (23) est constitué de plusieurs plateaux (25) parallèles qui, à leurs extrémités, sont pourvus de griffes (23).

11. Accumulateur d'énergie cinétique selon la revendication 1, **caractérisé en ce que** le rotor (22) à griffes (23) est constitué de plusieurs plateaux (25) parallèles crénelés, entre lesquels les bobines (24) sont insérées.

## Claims

1. Kinetic energy accumulator which mainly comprises:
- a shaft which supports a rotor provided with bobbins and an exciting rotor with bobbins,
- a drum surrounding said rotor, which drum comprises bearings which enable it to freely turn round said shaft;
- a casing carrying said shaft and the stator of the above-mentioned exciter,
**characterised in that**:
- said rotor (22) is a rotor with claws (23), provided with bobbins (24) which are connected to the bobbins (33) of the exciter rotor (32) by a conductor (34), via a rectifier bridge (35),
- it comprises a Gramme ring (28) with bobbins (30), whereby said Gramme ring (28) is surrounded by the drum (26) and is connected to a source of electricity (38-39) by means of a conductor (48).

2. Kinetic energy accumulator according to claim 1, **characterised in that** it is connected to a synchronous machine so as to form a UPS (uninterrupted electric power supply) with much autonomy.

3. Kinetic energy accumulator according to claim 1, **characterised in that** it is connected to a synchronous machine so as to form a UPS (uninterrupted electric power supply) with much capacity.

4. Kinetic energy accumulator according to any one of the preceding claims, **characterised in that** the above-mentioned bobbins (37) of the exciter stator (36) can be coupled to a source of electricity with an alternating current and/or a source of electricity with a direct current.

5. Kinetic energy accumulator according to any one of the preceding claims, **characterised in that** the source of electricity coupled to the Gramme ring (28) is an electric network (38) and/or a power supply with a variable frequency.

6. Kinetic energy accumulator according to any one of the preceding claims, **characterised in that** the part of the drum (26) surrounding the Gramme ring (28) is equipped with short-circuit rings (50) made of conductive materials.

7. Kinetic energy accumulator according to any one of claims 2 or 3, **characterised in that** the shaft (18) of the kinetic energy accumulator is coupled to the axle of an engine (39).

8. Kinetic energy accumulator according to claim 7, **characterised in that** the coupling between the above-mentioned shaft (18) and the axle of the motor (39) is realised by means of a clutch (51).

9. Kinetic energy accumulator according to claim 1, **characterised in that** the drum (26) is made of steel.

10. Kinetic energy accumulator according to claim 1, **characterised in that** the rotor (22) with claws (23) is formed of several parallel plates (25) which, on their far ends, are provided with claws (23).

11. Kinetic energy accumulator according to claim 1, **characterised in that** the rotor (22) with claws (23) consists of several parallel, ribbed plates (25) in between which the bobbins (24) are inserted.

## Patentansprüche

1. Akkumulator für kinetische Energie, im Wesentlichen umfassend:
- eine Welle, die einen Rotor trägt, der mit Spulen versehen ist, und einen gewickelten Erregerrotor,
- eine Trommel, die den Rotor umgibt, welche Trommel Lager aufweist, die es ihr ermöglichen, frei um die Welle zu drehen,
- ein Gehäuse zur Aufnahme der Welle und den Stator des oben genannten Erregers,
**dadurch gekennzeichnet dass**:
- der Rotor (22) ein Rotor mit Greifern (23) ist, versehen mit Spulen (24), die durch einen Leiter (34 mit den Spulen (33) des Rotors des Erregers (32) über eine Gleichrichterbrücke (35) verbunden sind.
- er einen Grammering (28) umfasst, der Spulen (30) umfasst, wobei der Grammering (28) von der Trommel (26) umgeben ist und mittels eines Leiters (48) mit einer Stromquelle (38-39) verbunden ist.

2. Akkumulator für kinetische Energie nach Anspruch 1, **dadurch gekennzeichnet, dass** er mit einer synchronen Maschine verbunden ist, um eine unterbrechungsfreie Versorgung von hoher Autonomie zu bilden.

3. Akkumulator für kinetische Energie nach Anspruch 1, **dadurch gekennzeichnet, dass** er mit einer synchronen Maschine verbunden ist, um eine unerbrechungsfreie Versorgung von hoher Leistung zu bilden.

4. Akkumulator für kinetische Energie nach einem der vorhergehenden Ansprüche, **dadurch gekennzeichnet, dass** die Spulen (37) des Stators (36) des Erregers mit einer Wechselstromquelle und/oder einer Gleichstromquelle verbunden werden können.

5. Akkumulator für kinetische Energie nach einem der vorhergehenden Ansprüche, **dadurch gekennzeichnet, dass** die mit dem Grammering (28) verbundene Energiequelle ein elektrisches (38) und/oder eine Versorgung von variabler Frequenz ist.

6. Akkumulator für kinetische Energie nach einem der vorhergehenden Ansprüche, **dadurch gekennzeichnet, dass** das Teil der Trommel (26), das den Grammering (28) umgibt, mit Kurzschlussringen (50) aus leitenden Materialien versehen ist.

7. Akkumulator für kinetische Energie nach einem der Ansprüche 2 oder 3, **dadurch gekennzeichnet, dass** die Welle (18) des Akkumulators für kinetische Energie mit der Achse eines Motors (39) verbunden ist.

8. Akkumulator für kinetische Energie nach Anspruch 7, **dadurch gekennzeichnet, dass** die Verbindung zwischen der Welle (18) und der Achse des Motors (39) mittels einer Kupplung (51) ausgeführt ist.

9. Akkumulator für kinetische Energie nach Anspruch 1, **dadurch gekennzeichnet, dass** die Trommel (29) aus Stahl ist.

10. Akkumulator für kinetische Energie nach Anspruch 1, **dadurch gekennzeichnet, dass** der Rotor (22) mit Greifern (23) von mehreren parallelen Platten (25) gebildet ist, die an ihren Enden mit Greifern (23) versehen sind.

11. Akkumulator für kinetische Energie nach Anspruch 1, **dadurch gekennzeichnet, dass** der Rotor (22) mit Greifern (23) von mehreren parallelen, gerippten Platten (25) gebildet ist, zwischen denen die Spulen (24) eingesetzt sind.
